Europäisches Patentamt

European Patent Office

Office européen des brevets

(11) Publication number: **0 426 622 A1**

# EUROPEAN PATENT APPLICATION

(21) Application number: **90830415.7**

(22) Date of filing: **24.09.90**

(51) Int. Cl.⁵: **G01F 23/28**

(30) Priority: **26.09.89 IT 4840189**

(43) Date of publication of application:
**08.05.91 Bulletin 91/19**

(84) Designated Contracting States:
**AT BE CH DE DK ES FR GB GR LI LU NL SE**

(71) Applicant: **ITAL IDEE s.r.l.**
**Via dell'Elettronica, 16**
**I-00144 Roma(IT)**

(72) Inventor: **Cantoni, Angelo**
**Via Vitaliano Brancati, 51**
**I-00145 Roma, RM(IT)**

(74) Representative: **Cavattoni, Fabio et al**
**Cavattoni & Raimondi Viale dei Parioli, 160**
**I-00197 Roma(IT)**

(54) **Device for measuring the relative content of tanks containing fluids possessing different electrical properties.**

(57) The device of the invention comprises means for generating a radio-frequency signal, transmitting antenna means (33) fed by the radio-frequency signal to establish a radio-frequency field coupled electromagnetically to the fluid contained in the tank, receiving antenna means (34) to receive the signal emitted by the transmitting antenna (33) after said signal has passed through the fluid, and means for measuring the strength of the signal received by the receiving antenna (34) to provide a signal indicative of the properties of the transmissive medium lying between the transmitting antenna (33) and the receiving antenna (34).

The transmitting antenna (33) and receiving antenna (34) are enclosed within a container (30, 31) which is constructed of low loss material unattackable by any fluids contained in the tank, and is arranged to prevent direct contact between the antennas (33, 34) and the fluid or fluids contained in the tank.

fig.3

# DEVICE FOR MEASURING THE RELATIVE CONTENT OF TANKS CONTAINING FLUIDS POSSESSING DIFFERENT ELECTRICAL PROPERTIES

This invention relates to a device for measuring the relative content of tanks containing fluids possessing different electrical properties.

In numerous types of plant, such as storage plant and the like, there is a need to know the nature of the fluid contained in a tank or pipe.

More specifically, it is often useful to know the level of a liquid in a tank and recognize the presence and possibly the quantity of a second and often undesirable liquid contained in the tank or pipe, in either layer or emulsion form.

One case of this kind is that of tanks or pipes containing fuel such as gasoline or diesel oil, of which it is desired to know the residual quantity or in which water of variable origin may be present in the form of a deposit on the bottom or as an emulsion, and which can be a source of incovenience on using the fuel.

The general object of the present invention is therefore to obtain an indication of the quantity of a fluid in a tank, or of the presence and relative quantity of a secondary fluid and main fluid of different electrical properties contained in a tank or pipe.

Devices for detecting an interface between two fluids of different electrical properties are known, these being based on impedance measurement (mainly capacitive) by probes in the form of electrodes disposed in contact with the surrounding fluid.

In the most widely used systems, the electrodes are fed with direct current which by electrolytic effect results after some time in incrustation and erosion of the electrodes, with consequent alteration of their capacitance and therefore calibration errors in the device.

In those systems in which the electrodes are fed with low-frequency alternating current, the electrolytic phenomena consequences are avoided, but the electrode capacitance is likewise altered because of the spontaneous deposition on the electrodes of impurities present in the surrounding fluid, and in particular the residues of irregular composition which have deposited on the bottom of the tank.

Consequently, in devices of the knwon art the direct exposure of metal electrodes to the fluids to be measured requires frequent electrode changing or cleaning, or the use of addditional electrical devices to periodically clean the electrodes by applying ultrasonic vibration or high voltages.

These and further problems are solved by the device for measuring the relative content of tanks containing fluids possessing different electrical properties according to the invention, which comprises means for generating a radio-frequency signal, transmitting antenna means fed by the radio-frequency signal to establish a radio-frequency field coupled electromagnetically to the fluid contained in the tank, receiving antenna means to receive the signal emitted by the transmitting antenna after said signal has passed through the fluid, and means for measuring the strength of the signal received by the receiving antenna to provide a signal indicative of the properties of the transmissive medium lying between the transmitting antenna and the receiving antenna.

Further according to the present invention, the transmitting antenna and the receiving antenna are enclosed within a container which is constructed of low loss dielectric material unattackable by any fluids contained in the tank, and is arranged to prevent direct contact between the antennas and the fluid or fluids contained in the tank.

Again according to the present invention, the strength of the electromagnetic field established between the transmitting antenna and the receiving antenna and its frequency are fixed such that the presence of the dielectric material-constructed container and of any non-metal residues deposited on the container do not substantially alter the signal provided by the device on the basis of the electromagnetic properties of the fluid traversed by the electromagnetic field between the transmitting antenna and the receiving antenna.

In the ensuing description, except where otherwise specified the term "antenna" is used to indicate either a transmitting antenna or a receiving antenna, given that as the transmission medium (fluid or fluids) is electromagnetically isotropic the principle of reciprocity is valid.

Before describing the constructional details of the device of the present invention a description will be given of the differences between a conventional capacitive transducer fed with alternating current of a more or less high frequency and the technical teaching of the invention.

In a capacitive transducer a displacement current defined by Maxwell equations exists in the medium between the electrodes (whether the conductor-liquid contact is direct or via a dielectric). For equal parameters such as frequency, voltage and electrode geometry, the value of this displacement current depends on the dielectric constant of the interposed medium. In a generic liquid medium, the dielectric constant depends on the nature of the liquid and the possible presence of ionized solutes. In mathematically representing the displacement current, the relative dielectric constant of the medium between the electrodes has a complex value with a real part and an imaginary part which depend on the characteristics of the liquid. Except in the case of very complex circuits (discrimination between the real and imaginary component of the displacement current), a capacitive transducer is unable to discriminate between a good dielectric liquid and poor dielectric liquid, such as hydrocarbons and water or water/hydrocarbon emulsions respectively.

In the device according to the invention an electromagnetic field substantially of radio-frequency is used. The equations describing the radio-frequency energy propagation (electromagnetic waves) take account of the characteristics of the interposed medium (dielectric constant, electrical conductivity), to give a different power transmission coefficient (real) between a transmitting antenna and a receiving antenna according to the characteristics of the medium, as will be apparent to a person skilled in the art.

In the case of a dielectric medium substantially without losses such as an uncontaminated hydrocarbon, an electromagnetic wave will propagate with relatively low attenuation. In the presence of an imperfect dielectric (with losses) such as water or water/hydrocarbon emulsions, there is relatively high attenuation because water is a very poor dielectric, especially if containing ionized solutes. Thus in either case, i.e. perfect dielectric or imperfect dielectric, there is a reduction in the net power transferred from the transmitting antenna to the receiving antenna. As this involve the transfer of a real power, it is very simple to determine the coefficient of attenuation caused by the medium interposed between the two antennas, to thus easily determine whether in the transmission medium there are only hydrocarbons present or also water and/or water/hydrocarbon emulsion.

Two currently preferred embodiments of the present invention are described in greater detail hereinafter by way of non-limiting example, with reference to the accompanying drawings in which:

Figure 1 shows the application of the device according to the present invention to a typical underground storage tank of a roadside fuel filling station;

Figure 2 shows the block diagram of the device according to the present invention;

Figure 3 is a partly sectional partial perspective view of the container of dielectric material which encloses the receiving or transmitting antenna in a first embodiment of the device according to the invention;

Figure 4 shows a modification of the structure of Figure 3, in which the antenna element is of unbalanced type and the electromagnetic circuit is enclosed by the structure of the tank or the like, which acts as the earth electrode;

Figure 5 shows the application of the device according to the invention to a generic pipe through which the fluid of which the composition is required to be known flows, this fluid being formed of a main fluid and a secondary fluid which have different electromagnetic properties;

Figure 6 shows the application of the device according to the invention to a generic tank of which it is required to kwon the residual fluid quantity or the relative quantity of a secondary fluid in a main fluid whether in layer or emulsion form, where these fluids have different electromagnetic properties;

Figures 7 and 7a are respectively an interrupted part sectional perspective and plan view of the container holding the electronic circuitry of the device according to the invention;

Figures 8, 8a and 9, 9a are respectively sectional side and sectional plan views of modifications of the receiving and transmitting antenna arrangement of the device according to the invention; and

Figure 10 shows a modification of the block diagram of Figure 2.

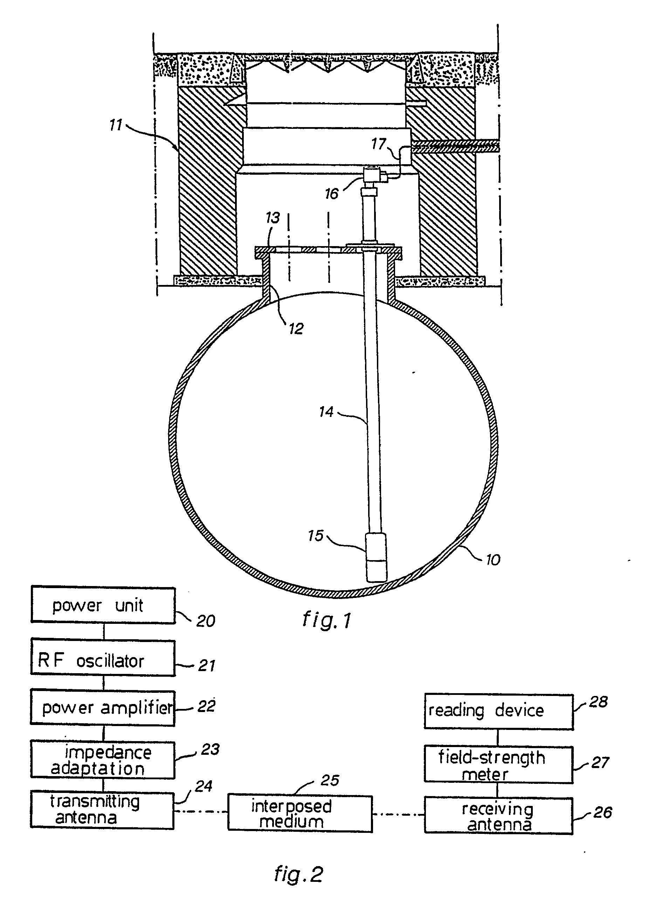

With reference to the drawings, in Figure 1 the reference numeral 10 indicates an underground tank located below a roadside structure indicated overall by 11.

The tank 10 is connected by a tubular part 12 to a plate 13 to which pipes are fixed in known manner for introducing and withdrawing the liquid contained in the tank 10, for example a hydrocarbon fuel. A tubular element 14, preferably of metal construction or otherwise compatible with the liquid contained in the tank 10, passes through the plate 13 to terminate at its bottom end with a probe 15, the structure of which is described hereinafter.

On the top of the tubular element 14 there is positioned a box containing at least part of the operational circuit for the probe 15 and connected by a cable 17 to the rest of the measuring apparatus and to relative devices for reading the data obtained by the probe 15.

As can be seen from Figure 2, the electronic measurement system comprises a power unit 20 for powering all the electronic circuits. The electronic circuits comprise a radio-frequency oscillator 21 piloting a power amplifier 22 which via an impedance adaptor 23 energizes a transmitting antenna 24 electromagnetically coupled to the (fluid) medium 25 interposed between the transmitting antenna 24 and the receiving antenna 25.

The receiving antenna pilots, possibly via an amplifier (not shown), a field-strength meter 27 of a type well known to a person skilled in the art, which provides a direct current signal (or a low frequency signal if the oscillator 21 is suitably amplitude-modulated), the value of which is measured by a reading and display device 28 consisting in practice of an electronic millivoltmeter.

As stated, leaving aside the instrument constants, the reading provided by the voltmeter 28 is directly related to the attenuation of the radio-frequency signal resulting from the interposed medium 25. This attenuation depends on the electrical characteristics of the interposed medium. In the case of hydrocarbons, the attenuation is minimal as contaminant-free hydrocarbons are practically ideal dielectrics. In the presence of contaminants such as water in either layer or emulsion form there is an attenuation of the electromagnetic signal received by the antenna 26. This derives from the fact that a contaminant such as water is powerful attenuator of electromagnetic waves. It is therefore simple to introduce conversion parameters into the reading device 28 or construct conversion tables which enable an operator to determine the quantity of the interposed medium 25 and/or to activate automatic devices for blocking the delivery of the fluid contained in the tank 10 and/or to provide an alarm signal indicating the need to clean, empty or otherwise operate on the tank 10.

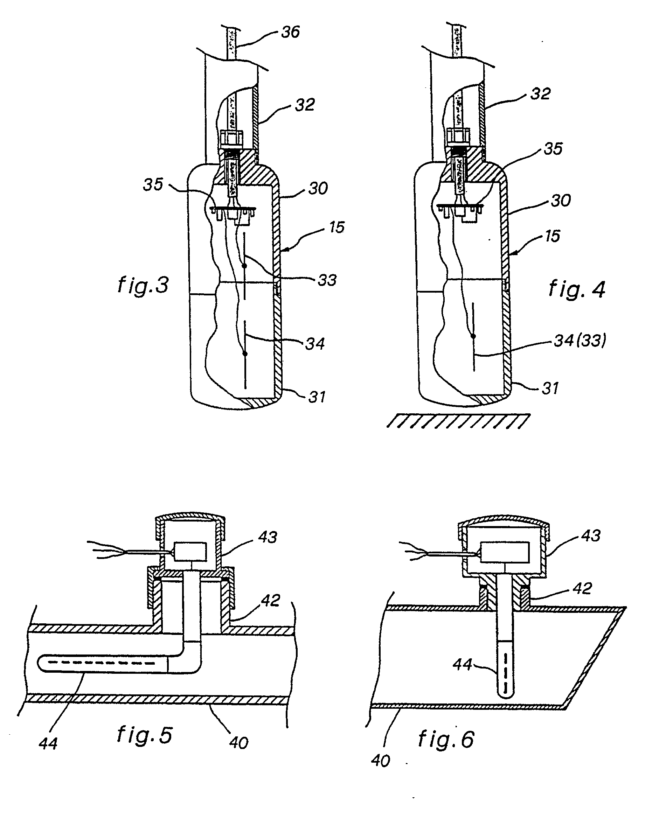

With reference now to Figures 3 and 4, it can be seen that the probe 15 comprises a casing consisting of half-casings 30, 31 sealed together and mounted at the end of an immersion tube 32. The reference numeral 35 indicates a board containing electronic components not described in detail, which are associated respectively with a transmitting radiator 33 and a receiving radiator 34 (or vice versa).

The interior of the probe 15 is preferably filled with one of the many synthetic cellular resins, and more preferably of the closed cell type, the material being insoluble and non-attackable by the medium contained in the tank 10. The purpose of the casing 30, 31 is to create a space about the radiators 33, 34 and prevent any sediments and/or dirt which may have accumulated directly on the radiators 33, 34 from altering the electrical characteristics (electromagnetic coupling) thereof, and resulting in wrong readings. This phenomenon is particularly prevalent in known devices of this class, especially if operating on direct current or low frequency alternating current.

A double coaxial cable 36 connectes the circuits on the board 35 to the rest of the apparatus.

Figure 4 shows a modification mechanically identical to that shown in figure 3, but with the difference that in this structure there is provided only one radiator/antenna 33 (34), the other radiator 34 (33) being contained in an analogous structure positioned in the tank 10 a certain distance away. In this manner, the extent of the interaction space between the receiving and transmitting radiators and the (fluid) transmissive medium contained in the tank can be increased, so increasing the measurement sensitivity of the instrument.

It should also be noted that the device according to the invention could also be advantageously used to measure the moisture content of loose materials contained in a (metal) container, such as grain, plastics granulates and the like.

Figures 5, 6, 8, 8a , 9, 9a show different embodiments of the probe of the device according to the invention.

Figure 5 shows a tubular structure 40 with a connector 42 on which there is mounted a head 43 housing part of the (tramsission or reception) electronic circuitry which pilots a transmitting (or receiving) element 44.

Figure 6 shows a modification of the probe of Figure 5. Corresponding parts are indicated by the same reference numerals. .

The constructions of Figures 5 and 6 are particularly suitable for probes with reception and transmission parts located a certain distance apart.

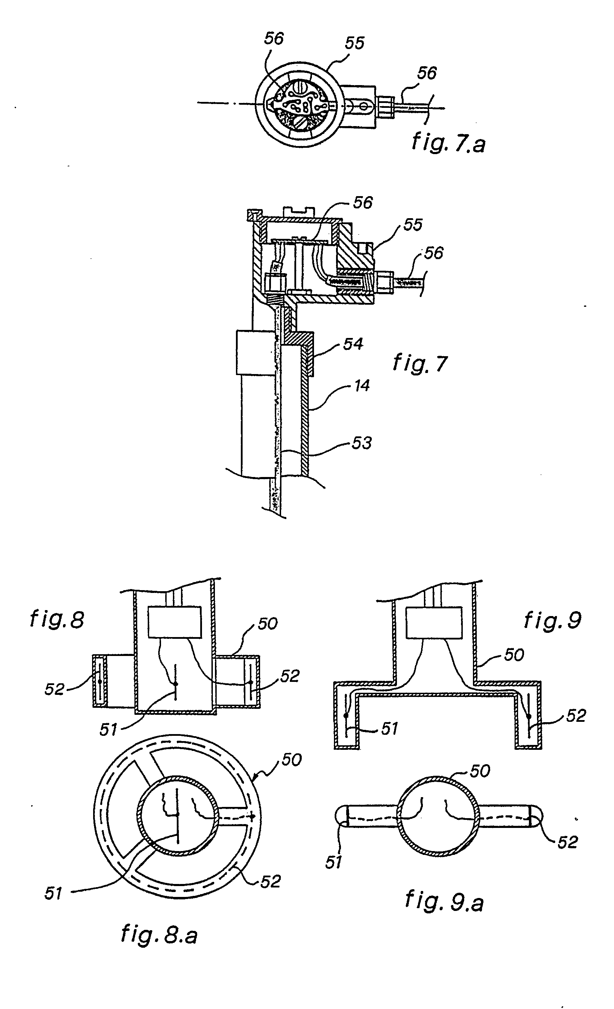

Figure 8, 8a and 9, 9a show a relatively compact structure according to the technical teaching of the present invention.

In these figures the containing structure indicated overall by 50 houses transmitting and receiving radiator elements 51, 52. Again in this case the empty spaces are filled with closed-cell cellular material for the aforesaid reasons.

It should again be noted that on the basis of the theorem of reciprocity, which is always valid for an electromagnetically isotropic transmission means, whether perfect or imperfect, the concepts of receiving radiator and transmitting radiator are interchangeable.

Figures 7 and 7a show by way of example the head structure indicated overall by 16 in Figure 1. The tube 14 through which the cables 53 pass is connected to a connector 54 defining a compartment containing a board (possibly supporting electronic components) from which the cables 53 and 56 branch.

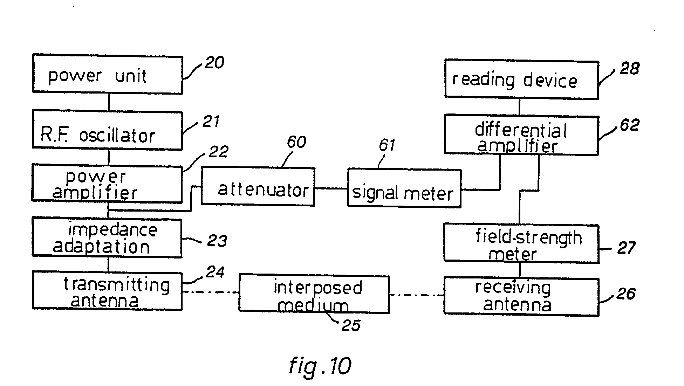

Figure 10 shows a modification of the circuit shown in Figure 2. In the circuit of Figure 10, which comprises all the blocks of Figure 2, these carrying the same reference numerals, the output of the amplifier 22 is also connected to an attenuator 60 which feeds a signal meter analogous to the field-strength meter 27. The outputs of the meter 61 and meter 27 are connected to a differential amplifier 62 which pilots the reading device 28.

This differential device nullifies the effect of variations in the output power of the amplifier 22, so improving the system performance given that absolute measurements are not made as in the case of the scheme of Figure 2, but only differential measurements.

It should be noted that the device according to the invention does not require special types of antennas as used in radio-communication. Both for the transmitting element and for the receiving element it is necessary only to provide a conductor able to ensure sufficient electromagnetic coupling to maximize electromagnetic interaction with the interposed medium of which the electrical characteristics are to be measured.

Likewise, the operating frequency is not a determining factor. It has to be sufficiently high to ensure electromagnetic and not purely electrostatic coupling. With regard to the upper limit, frequencies of the order of centimeter waves can be reached, and the radiating and receiving elements could consists of waveguide antennas as will be apparent to the person skilled in the art. In this latter case, attention must be paid to geometry, to take account of the "optical properties" of hyperfrequency electromagnetic waves.

## Claims

1. A device for measuring the relative content of tanks containing fluids possessing different electrical properties, characterised by comprising means (21) for generating a radio-frequency signal, transmitting antenna means (24; 33, 34; 44; 51, 52) fed by the radio-frequency signal to establish a radio-frequency field coupled electromagnetically to the fluid (25) contained in the tank (10), receiving antenna means (26; 34, 33; 44; 52, 51) to receive the signal emitted by the transmitting antenna after said signal has passed through the fluid, and means (27, 28; 61, 62) for measuring the strength of the signal received by the receiving antenna to provide a signal indicative of the properties of the transmissive medium (25) lying between the transmitting antenna and the receiving antenna.

2. A device according to claim 1, characterised in that the transmitting antenna (24; 33, 34; 44; 51, 52) and the receiving antenna (26; 34, 33; 44; 52, 51) are enclosed within a container (30, 31; 40, 42; 50) which is constructed of loss dielectric material unattackable by any fluids (25) contained in the tank (10), and is arranged to prevent direct contact between the antennas and the fluid or fluids contained in the tank.

3. A device according to claim 2, characterised in that the container (30, 31; 50) is filled with closed-cell expanded dielectric material.

4. A device according to any one of the preceding claims, characterised in that the strength of the electromagnetic field established between the transmitting antenna (24; 33, 34; 44; 51, 52) and the receiving antenna (26; 34, 33; 44; 52, 51) and its frequency are fixed such that the presence of non-metal residues deposited on the container (30, 31; 40, 42; 50) do not appreciably alter the signal provided by the device on the basis of the electromagnetic properties of the fluid traversed by the electromagnetic field between the transmitting antenna and the receiving antenna.

5. A device according to any one of the preceding claims, characterised in that the combination of operating frequency, antenna geometry and signal strength is chosen so as to maximize the electromagnetic coupling between the transmitting antenna (24; 33, 34; 44; 51, 52) and receiving antenna (26; 34, 33; 44; 52, 51), and to minimize the electrostatic coupling between the transmitting antenna and receiving antenna.

6. A device according to any one of the preceding claims, characterised in that the receiving antenna (26; 34, 33; 44; 52, 51) is associated with a meter (27; 61) for measuring the received field strength, said meter being associated with a display unit (28) and/or alarm unit and/or unit for shutting down the plant with which the tank (10) is associated if signals indicating an abnormal condition by virtue of higher than preset parameters appear.

7. A device according to any one of the preceding claims, characterised in that the fluid (25) consists of hydrocarbons and the alarm condition is predetermined on the basis of contaminants such as water.

8. A device according to any one of claims 1 to 6, characterised in that the fluid (25) consists of loose materials, the alarm condition being predetermined on the basis of the moisture content of said materials.

9. A device according to any one of the preceding claims, characterised in that the transmitting antenna (33, 34; 51, 52) and the receiving antenna (34, 33; 52, 51) are housed in the same container (30, 31; 50).

10. A device according to any one of claims 1 to 8, characterised in that the transmitting antenna (33, 34; 44) and the receiving antenna (34, 33; 44) are housed in separate containers (30, 31; 40, 42) between which the fluid (25) is interposed.

11. A device according to any one of claims 1 to 8, characterised in that the transmitting antenna (51) and receiving antenna (52) are housed in a single container (50) defining a space communicating with the tank (10), so that the fluid (25) becomes interposed between the transmitting antenna and the receiving antenna.

fig.1

| power unit | 20 |
| RF oscillator | 21 |
| power amplifier | 22 |
| impedance adaptation | 23 |
| transmitting antenna | 24 |

| interposed medium | 25 |

| reading device | 28 |
| field-strength meter | 27 |
| receiving antenna | 26 |

fig.2

fig.3

36

32

35

30

15

33

34

31

fig. 4

32

35

30

15

34(33)

31

fig.5

43

42

44

40

fig.6

43

42

44

40

fig. 7.a

fig. 7

fig.8

fig. 8.a

fig. 9

fig. 9.a

```
┌─────────────────┐  20        ┌─────────────────┐  28
│   power  unit   │            │  reading device │
└────────┬────────┘            └────────┬────────┘
         │                              │
┌────────┴────────┐  21        ┌────────┴────────┐  62
│  R.F. oscillator│            │   differential  │
└────────┬────────┘            │    amplifier    │
         │                     └────────┬────────┘
┌────────┴────────┐  22                 │
│     power       │    60      61       │
│   amplifier     ├──┐  ┌──────────┐  ┌─┴────────┐
└────────┬────────┘  └──┤attenuator├──┤signal    │
         │              └──────────┘  │ meter    │
┌────────┴────────┐  23               └──────────┘
│   impedance     │            ┌─────────────────┐
│  adaptation     │            │  field-strength │  27
└────────┬────────┘            │      meter      │
         │                     └────────┬────────┘
┌────────┴────────┐  24  ┌──────────┐   │
│  transmitting   │      │interposed│ ┌─┴───────────┐  26
│   antenna       ├─·─·─·┤ medium   ├·┤  receiving  │
└─────────────────┘      └──────────┘ │   antenna   │
                              25      └─────────────┘
```

fig.10

9

| | DOCUMENTS CONSIDERED TO BE RELEVANT | | EP 90830415.7 |
|---|---|---|---|

| Category | Citation of document with indication, where appropriate, of relevant passages | Relevant to claim | CLASSIFICATION OF THE APPLICATION (Int. Cl.5) |
|---|---|---|---|
| A | <u>US - A - 4 107 993</u> (SHUFF) * Totality; esp. abstract; column 2, lines 15-33; fig. 1 * -- | 1,2,6, 10,11 | G 01 F 23/28 |
| A | <u>US - A - 3 811 087</u> (SCHMELZER) * Abstract; column 1, lines 25-29; column 1, line 58 - column 2, line 40; fig. 4 * ---- | 6,8 | |
| | | | TECHNICAL FIELDS SEARCHED (Int. Cl.5) |
| | | | G 01 F 23/00 G 01 F 17/00 |

The present search report has been drawn up for all claims

| Place of search | Date of completion of the search | Examiner |
|---|---|---|
| VIENNA | 21-12-1990 | FIALLA |

EPO FORM 1503 03.82 (P0401)